# EUROPÄISCHE PATENTSCHRIFT

(11) **EP 0 630 448 B1**
(45) Veröffentlichungstag und Bekanntmachung des Hinweises auf die Patenterteilung: **11.12.1996**
(21) Anmeldenummer: 94904564.5
(22) Anmeldetag: 30.12.1993
(51) Int. Cl.: F16F 9/48, F16F 9/34, F16F 9/08, F16F 9/36

(54) **HYDRAULISCHER STOSSDÄMPFER**
HYDRAULIC DASHPOT
AMORTISSEUR HYDRAULIQUE

(30) Priorität: 20.01.1993 DE 9300650 U
(43) Veröffentlichungstag der Anmeldung: 28.12.1994
(73) Patentinhaber: ZIMMER, Günther Stephan, D-77866 Rheinau (DE); ZIMMER, Martin Johannes, D-77688 Rheinau (DE)
(72) Erfinder: ZIMMER, Herbert, D-77886 Lauf (DE)
(74) Vertreter: Thoma, Friedrich, Dipl.-Ing.(FH)
(86) Internationale Anmeldenummer: DE9301260
(87) Internationale Veröffentlichungsnummer: WO9417317

(56) Entgegenhaltungen:
- EP-A- 0 436 461
- WO-A-86/06806
- DE-A- 2 604 467
- DE-U- 1 635 388
- DE-U- 7 734 675
- FR-A- 2 251 751
- US-A- 1 794 807
- US-A- 4 078 638
- DATABASE WPI Week 8607, Derwent Publications Ltd., London, GB; AN 86-044149 & GB,A,2 162 923 (NIPPON PISTON RING KK)

## Beschreibung

Die Erfindung betrifft einen hydraulischen Stoßdämpfer mit den Merkmalen nach dem Oberbegriff des Patentanspruchs 1.

Bei derartigen Stoßdämpfern, insbesondere zum einstellbaren, geregelten Abschwächen der Intensität der kinetischen Energie von drehend und/oder linear beschleunigten Massen, insbesondere für den Einsatz im Maschinenbau, in der Handhabungs- und Automationstechnik, ist es erforderlich, daß die Abschwächung dieser Energie nicht nur unabhängig von der Beschleunigung der Massen, und/oder von Massenunterschieden, und/oder von Massenveränderungen, stets hinreichend gleichförmig verläuft, sondern auch, daß diese Energie welligkeitsfrei und reproduzierbar bis auf Null abgeschwächt wird. Dabei soll sichergestellt sein, daß durch eine zweckmäßige konstruktive Dimensionierung des Ganzen, insbesondere der dynamischen Funktionselemente, eine ausreichend wartungsfreie, über dem Durchschnitt vergleichbarer Stoßdämpfer liegende Funktionsdauer erzielt wird. Außerdem soll gewährleistet sein, daß derartige Stoßdämpfer rationell und wirtschaftlich präzise und in der Funktion reproduzierbar herstellbar sind.

Eine, aus der DE-U-77 34 675 bekanntgewordene, einstellbare Vorrichtung zur Absorption kinetischer Energie, insbesondere in der Ausführung eines Stoßdämpfers für industrielle Anwendungszwecke, besteht dort im einzelnen aus einem Gehäuse, mit einer in diesem Gehäuse längsverlaufenden hohlen Kammer, die hydraulisches Fließmittel enthält, mit einer Kolbeneinrichtung, die in der hohlen Kammer längsbewegbar ist, mit einer mit der Kolbeneinrichtung verbundenen Kolbenstange zur Aufnahme äußerer Kräfte, mit einer Anzahl Düsenöffnungen in der hohlen Kammer, die dort in Bewegungsrichtung der Kolbeneinrichtung im Abstand voneinander angeordnet sind, mit einer Einrichtung außerhalb der hohlen Kammer, die eine längsgestreckte, relativ schmale und sich längs der hohlen Kammer erstreckenden, Bahn bildet, die in Fließmittelverbindung mit den Düsenöffnungen steht, mit einer Einrichtung in einem bestimmten Bereich des Gehäuses, die in Fließmittelverbindung mit der vorgenannten Bahn steht und zur Aufnahme des Fließmittels dient, welches durch die Düsenöffnungen und längs der Bahn strömt, und mit einer Strömungssteuereinrichtung mit einem längsgestreckten Element, welches einstellbar im Gehäuse gelagert ist, das längs der Bahn in Längsrichtung und arbeitsmäßiger Beziehung zu den Düsenöffnungen, zwecks Einstellung der wirksamen Größe dieser Düsenöffnungen, bewegbar ist, wobei das Strömungssteuerelement längs axial im Abstand voneinander Oberflächengestaltungen aufweist, welche dazu ausgebildet sind, mit den Düsenöffnungen aufeinanderzupassen, wobei jede dieser Gestaltungen sich abmessungsmäßig axial des längsgestreckten Elementes ändert, wodurch eine Bewegung des Strömungssteuerelementes längs der Bahn, den Grad des Aufeinanderpassens zwischen entsprechenden Oberflächengestaltungen und den Düsenöffnungen variiert, um die wirksame Größe der Düsenöffnungen einzustellen.

Dieser bekannte Stoßdämpfer ist mit dem Nachteil behaftet, daß dort zur Abschwächung der kinetischen Energie eines relativ breiten Massenspektrums, insbesondere wenn sich die Massengeschwindigkeit abschwächungskonform dem Wert Null nähert, keine zufriedenstellende Gleichförmigkeit erzielbar ist, sondern daß in der Praxis ein ungleichförmiger und funktionsbedingt unkontrollierbarer Welligkeitsverlauf unterschiedlicher Intensität feststellbar ist, der offensichtlich auf das intermittierende Schließen der Düsenöffnungen durch den Kolben zurückzuführen ist. Ferner ist dort eine, durch die einseitig angeordenten Düsenöffnungen bewirkte Kolbenbelastung mit erhöhten Reibungsverlusten von erheblichem Nachteil.

Aus der DE-U-1 635 388 ist ein Stoßdämpfer bekannt, mit einem Zylindergehäuse, mit einem Kolben, mit einer, den Ölfluß au dem Öl- und Kolbenraum regelnden, eine Abschwächung einer, den Kolben beaufschlagenden, kinetischen Energie bewirkenden Ölabflußregelung, mit einem Ölrückflußventil, und mit einer, den Kolben in die Ausgangslage zurückdrückenden, Federkraft, wobei am Kolbenmantel des Kolbens eine axial wendelförmig verlaufende Dämpfungsrille angeordnet ist, und wobei an der Innenmantelfläche des Öl- und Kolbenraums eine koaxiale, endlos umlaufende Ölabflußnut vorgesehen ist, die in der Ausgangslage des Kolbens, vom Kolben vollständig überdeckt ist.

Von Nachteil ist bei diesem Stoßdämpfer, daß der Ölrückfluß in den Kolbenraum über eine Austrittsbohrung im Bereich der Ölabflußnut und einen auf der Außenmantelfläche des Stoßdämpfergehäuse verlaufenden Ölabflußkanals verläuft, der nicht nur aufwendig und unwirtschaftlich herstellbar, sondern auch äußerst stör- und beschädigungsanfällig ist.

Der Erfindung liegt die Aufgabe zugrunde, die Nachteile dieser bekannten Stoßdämpfer zu beseitigen, und einen Stoßdämpfer der eingangsgenannten Art zu schaffen, der rationell und wirtschaftlich präzise reproduzierbar herstellbar, sondern auch robust im Betrieb ist.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft bei diesem neuen Stoßdämpfer, zur Erzielung eines hinreichend gleichförmigen Verlaufs der Abschwächung kinetischer Energie bis auf den Wert Null, ist nicht nur die besondere Ausbildung des dynamischen Kolbens, mit einer am Kolbenmantel vorgesehenen, axial spindelförmig verlaufenden, Rille, die in Verbindung mit einer am inneren Umfangsmantel des Zylindergehäuses endlos kreisförmig verlaufenden Ölablaufnut steht, die zusammen mit mindestens einer Ölabflußrille einen gleichförmigen, sich stetig verlängernden Ölabflußweg gewährleistet, sondern auch die zweckmäßige funktionskonforme Ölabführung in der Ölabflußrille, die zweckmäßigerweise mehrfach, insbesondere dreifach und in räumlich gleichen Abständen zueinander, am inneren Umfangsmantel des Zylindergehäuses unmittelbar am Kolben vorbei, bis hinter eine koaxial verlaufende, elastische Gummimanschette, die zusätzlich zu dem sich funktionskonform, durch den Kolbenvorschub sich hinter dem Kolben ausbildenden zweiten Öl- und Kolbenraum in vorteilhafterweise vorgesehen ist, die als Ölreservoir dient, aus der das Öl beim Zurückführen des Kolbens in die Ausgangslage, unter der Wirkung der Gummielastizität der Manschette wieder in den zweiten Öl- und Kolbenraum herausgedrückt und durch das Ölrückflußventil das zwischen den beiden Öl- und Kolbenräumen einseitig wirksam ist, in den ersten Öl- und Kolbenraum zurückfließen kann. Vorteilhaft ist ferner nicht nur der mit der Neuerung erzielbare, im Durchmesser, größere Kolben mit einem damit erzielbaren geringeren Öldruck, sondern auch die relativ einfache, rationelle und wirtschaftlich präzise reproduzierbare Herstellbarkeit, sowohl der Einzelteile, als auch des ganzen Stoßdämpfers.

Ein Ausführungsbeispiel des neuen Stoßdämpfers ist in den Zeichnungen dargestellt und wird im folgenden näher erläutert. Es zeigen
- Fig. 1: eine Längsschnittansicht durch den Stoßdämpfer in der Funktionsausgangsstellung,
- Fig. 2: eine Querschnittsansicht durch den Stoßdämpfer nach Fig. 1 im Bereich des Kolbens,
- Fig. 3: eine Längsschnittansicht durch den Stoßdämpfer nach Fig. 1 und 2 in der Funktionsendstellung.

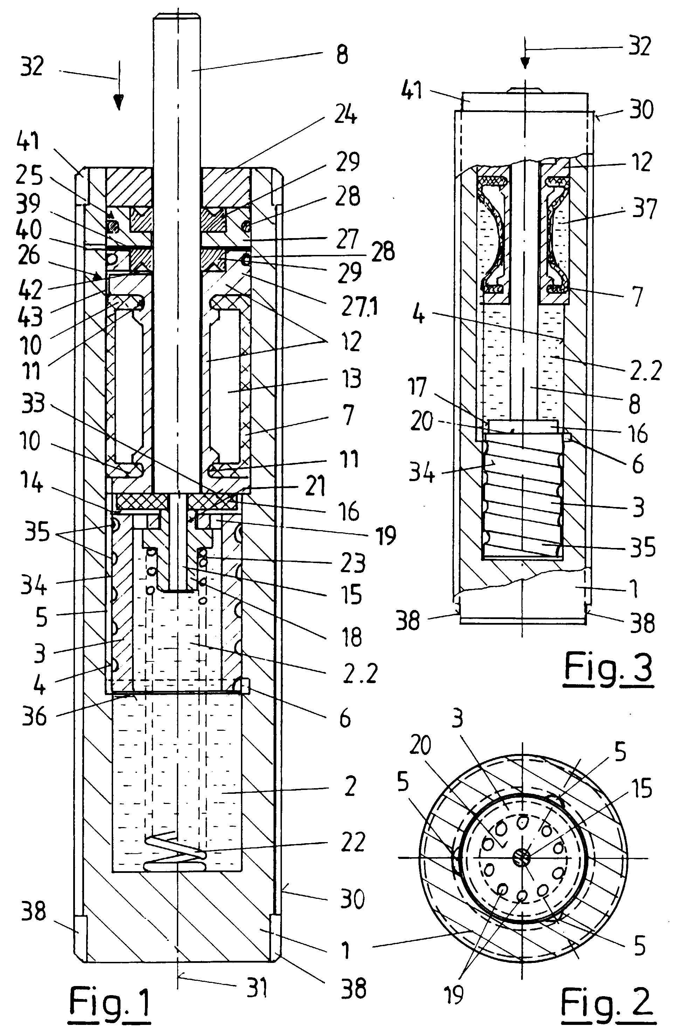

Der, in den Fig. 1 bis 3 dargestellte, Stoßdämpfer besteht im einzelnen aus dem Zylindergehäuse 1, das mit einem koaxial verlaufenden, zylinderförmigen, einseitig geschlossenen, einen kreisförmigen Querschnitt aufweisenden, ersten Öl- und Kolbenraum 2 versehen ist, dessen axiale Tiefe der axialen Länge des Kolbens 3 entspricht, auf dessen Umfangsmantel 34 eine, insbesondere axial spindelförmig verlaufende, Dämpfungsrille 35 angeordnet ist, die in die untere Kolbenstirnseite 36, und damit in den Öl- und Kolbenraum 2, mündet.

Der Kolben 3 besteht zweckmäßigerweise insbesondere aus Stahl. Der Umfangsmantel 34 mit den Dämpfungsrillen 35 ist dabei oberflächengehärtet. Es ist jedoch auch vorgesehen, daß für bestimmte Anwendungsfälle der Kolben 3 auch aus Aluminium hergestellt sein kann, wobei die Oberfläche mit einem entsprechend harten Belag versehen ist. Außerdem ist es möglich, daß der Kolben aus sogenannter Hartbronze, oder aus einem Kunststoff hergestellt ist.

An den Öl- und Kolbenraum 2 schließt sich axial ein zweiter, gleich langer, oder nur unwesentlich längerer, Öl- und Kolbenraum 2.2 an, in dessen koaxial verlaufender Innenmantelfläche 4 drei, axial in räumlich gleichen Abständen zueinander verlaufende, Ölabflußrillen 5 radial mit geringer Tiefe eingearbeitet sind, wie dies aus der Fig. 2 näher ersichtlich ist.

Diese Ölabflußrillen 5 münden auf der einen, dem Öl- und Kolbenraum 2 benachbarten, Seite in eine endlos verlaufende Ölabflußnut 6, die koaxial im Stoßbereich zwischen den beiden Öl- und Kolbenräumen 2 und 2.2 angeordnet und in die Innenmantelfläche 4 eingelassen ist. Diese Ölabflußnut 6 besitzt insbesondere einen rechteckigen Querschnitt.

Auf der anderen Seite verlaufen diese Ölabflußrillen 5 bis hinter die koaxial angeordnete Gummimanschette 7, die insbesondere als ein sogenanntes, im Volumen sich in Grenzen selbsttätig dem Ölzufluß anpassendes und zusätzlich zum zweiten, durch den Kolbenvorschub sich bildenden Öl- und Kolbenraum 2.2 vorgesehenes, Ölreservoir 37 dient, das sich unter dem Einfluß der Ölzufuhr koaxial zur Kolbenstange 8 hin dehnt, wie dies aus der Fig. 3 klar ersichtlich ist.

Die Gummimanschette 7 ist dementsprechend als koaxialer, symmetrischer Formkörper ausgebildet, der im Bereich beider Stirnseiten 9 jeweils mit koaxialen, kreisrunden Flanschen 10 versehen ist, die mit entsprechenden koaxialen, kreisrunden Nuten 11 einer Lagerhülse 12 formschlüssig in Eingriff stehen.

In der Ausgangslage des Kolbens 3 bildet sich zwischen der entspannten Gummimanschette 7 und der Lagerhülse 12 ein sogenannter Gasraum 13, der mit Luft, insbesondere mit athmosphärischem Druck, montagekonform gefüllt ist. Dieser Gasraum 13 kann jedoch erforderlichenfalls auch mit jedem anderen Druck und/oder einem bestimmten Gas gefüllt sein.

8 bezeichnet die, in der Lagerhülse 12 gelagerte und axial geführte, Kolbenstange, die im Bereich des Kolbens 3 mit einem einseitigen koaxial angeordneten Zapfen 15 versehen ist, auf dem, der Kolbenstange 8 benachbart, zunächst eine Dichtscheibe 16 gelagert ist, die im äußeren Durchmesser etwas kleiner ist, als der Durchmesser des zweiten Öl- und Kolbenraums 2.2, sodaß zwischen der dortigen Innenmantelfläche 4 und der Mantelfläche 17 der Dichtscheibe 16 ein kleiner, endloser Ölspalt gebildet ist. Die Dichtscheibe 16 besteht zweckmäßigerweise aus einem harten Werkstoff, insbesondere aus gehärtetem Stahl.

18 kennzeichnet eine Lagerbuchse, die ebenfalls auf dem Zapfen 15 der Kolbenstange 8 kraftschlüssig angeordnet ist. Diese Lagerbuchse 18 dient einerseits der axialen Fixierung der Federkraft 22, andererseits ist sie ein Hilfsbestandteil des erforderlichen Ölrückflußventils, das aus der Dichtscheibe 16 und dem, mit Ölrückflußbohrungen 19 versehenen, Kolbenboden 20 gebildet ist.

Zur Funktion dieses Ölrückflußventils ist an der Lagerbuchse 18 eine axialverlaufende, koaxiale Begrenzung 21 vorgesehen, deren Länge etwas größer ist, als die Dicke des Kolbenbodens 20. Der dadurch gebildete Ölspalt 14 dient dem Ölrückfluß, wenn der Kolben 3 unter der Wirkung der koaxial verlaufenden Federkraft 22 in die Ausgangsstellung zurücktransportiert wird. Die Federkraft 22 steht im Bereich der Kolbenseite koaxial mit einem Flansch 23 der Lagerbuchse 18 in Eingriff.

24 bedeutet eine äußere Verschlußscheibe, mit der das Stoßdämpfer- oder Zylindergehäuse 1 auf der Seite der Kolbenstange 8 verschlossen wird. Diese Verschlußscheibe 24 ist außerdem zur axialen Lagerführung der Kolbenstange 8 vorgesehen. 30 bezeichnet ein am Gehäuse 1 vorgesehenes, zur Stoßdämpferachse 31 koaxial, insbesondere über die gesamte Länge des Gehäuses 1 verlaufendes, Schraubengewinde, zur Befestigung des Stoßdämpfers an einer Vorrichtung. Mit diesem Schraubengewinde 30 ist es auch möglich, eine Feineinstellung der Endlage des Stoßdämpfers vorzunehmen. Außerdem dient dieses Gewinde 30 in bestimmten Anwendungsfällen als Kühlrippen zur Abgabe etwaiger Funktionswärme.

Im Bereich des Schraubengewindes 30 ist am Zylindergehäuse 1, auf der Seite der Kolbenstange 8, ein in der Länge begrenzter, einseitiger, koaxiler zylindrischer Bolzen 41 vorgesehen, zur Anordnung eines hier nicht näher dargestellten O-Rings, als Dichtung gegenüber einem Druckraum, zu dem der Stoßdämpfer angeordnet und befestigt sein kann.

Außerdem ist es vorgesehen, daß im Bereich des Schraubengewindes 30 am 5 Gehäuse 1 insbesondere zwei, einander räumlich gegenüberliegende Flächen 38 angeordnet sind, zum Ansetzen eines Montagewerkzeuges.

Hinter der Verschlußscheibe 24 sind mindestens zwei Dichtungen 25 und 26 vorgesehen. Die, der Verschlußscheibe 24 benachbarte, Dichtung 25 dient zur Abdichtung des Stoßdämpferinnern gegen athmosphärische Einflüsse. 27 27.1 kennzeichnen metallische Dichtungsmittelträger, die jeweils mit einem, zum Gehäuse 1 hin wirkenden, O-Ring 28 und einem, zur Kolbenstange 8 hin wirkenden, relativ härteren Dichtring 29 versehen sind.

Die axial zur Dichtung 25 eng benachbarte Dichtung 26 dient dort zur Abdichtung eines Ölaustritts aus dem Stoßdämpferinnern. Der Dichtungsmittelträger 27.1 ist dort insbesondere einstückig mit der Lagerhülse 12 verbunden. 28 bedeutet dort wieder ein, zum Gehäuse 1 hin wirkender O-Ring und 29 bezeichnet wiederum einen, zur Kolbenstange 8 hin wirkenden, relativ härteren, Dichtring.

In diesem Rahmen ist es vorgesehen, daß die Dichtung 25 insbesondere weicher ausgebildet ist, als die Dichtung 26. Damit kann sichergestellt werden, daß etwa über die Dichtung 25 eingedrungene Luft wieder austreten kann.

Außerdem ist in diesem Zusammenhange vorgesehen, daß zwischen den beiden Dichtungsmittelträger 27 und 27.1 eine sogenannte Entlüftungsrille 39 angeordnet ist, die in eine Entlüftungsbohrung 40 im Zylindergehäuse 1 mündet, wie die Fig. 1 zeigt. Damit kann Luft, die insbesondere durch die Relativbewegung der Kolbenstange 8 gegenüber dem Dichtring 29 eingedrungen ist, wieder entweichen.

42 bezeichnet eine sogenannte Entölungsbohrung, die dort im Bereich des Dichtungsmittelträgers 27.1, an der Lagerhülse 12, vorgesehen ist. Durch diese Entölungsbohrung 42 und eine sich daran im Bereich des Gehäuseinnenmantels axial verlaufend anschließende Ölabführnut 43, wird Hydrauliköl, das eventuell durch die Relativbewegung der Kolbenstange 8 aus dem Öl- und Kolbenraum 2.2 in den Bereich des Dichtrings 29 gefördert wurde, hinter die Gummimanschette 7, in das Ölreservoir 37 geleitet.

Die vorteilhafte Funktion des zuvor beschriebenen neuen Stoßdämpfers ist nun folgende: Wird die Kolbenstange 8 von einer kinetischen Energie in Pfeilrichtung 32 beaufschlagt, dann wird zunächst die Dichtscheibe 16 gegen den Staudruck des, in den Öl- und Kolbenräumen 2, 2.2 stehenden, Hydrauliköls und der Federkraft 22, auf die Vorderseite des Kolbenbodens 20 gepreßt, zumal auch der Kolben 3 unter dem Ölstaudruck zunächst in seiner Lage verharrt. Die im Kolbenboden 20 vorgesehenen Ölrückflußbohrungen 19 werden geschlossen.

Unter der Wirkung der weiteren Beaufschlagung der Kolbenstange 8 durch die kinetische Energie, wird diese nunmehr auf den Kolben 3 übertragen, sodaß das in dem Öl- und Kolbenraum 2 komprimierte Öl nun in die, auf der unteren Kolben-Stirnseite 36 mündende, Dämpfungsrille 35 gepreßt wird. Das Öl fließt dann über die ringförmige Ölabflußnut 6 und die dort mündenden Ölabflußrillen 5, fast drucklos am äußeren Kolbenmantel 34 vorbei, in den sich unter der Relativbewegung des Kolbens 3, zwischen der Dichtscheibe 16 und der Stirnseite 33 der Lagerhülse 12 gebildeten zweiten Öl- und Kolbenraum 2.2, bzw. in das gummielastische Ölreservoir 37, wie dies aus der Fig. 3 ersichtlich wird.

Je weiter der Kolben 3 in den Öl- und Kolbenraum 2 eintaucht, um so länger wird der Ölfluß zwischen dem Eintritt in die Dämpfungsrille 35 auf der Kolbenstirnseite 36 bis zum Austritt in die Ölabflußnut 6.

Diese gleichförmige Ölflußverlängerung über die Dämpfungsrille 35 bewirkt ein absolut gleichförmiges und völlig welligkeitfreies Abschwächen der zu dämpfenden Bewegungsenergie bis auf den Wert Null. Die Länge des Ölflußweges, der zwischen dem Öleintritt in die Dämpfungsrille 35 und dem Austritt in die Ölabflußnut 6 liegt, bestimmt damit im wesentlichen den Abschwächungs- oder Dämpfungfaktor dieses Stoßdämpfers. D.h. der Abschwächungsfaktor, der einer Ölflußlänge beispielsweise einer Kolbenumfangslänge der Dämpfungsrille 35 entspricht, ist um ein vielfaches kleiner, als die Ölflußlänge, die beispielsweise fünf Kolbenumfangslängen der Dämpfungsrille 35 entspricht.

Nach dem völligen Abschwächen der zu dämpfenden Bewegungsenergie, bzw. nach dem Stillstand und Entlasten des Kolbens 3, beispielsweise in einer aus der Fig. 3 ersichtlichen Lage, wird der Kolben 3, unter der Wirkung der Federkraft 22, entgegen der Pfeilrichtung 32 in die Ausgangslage, gemäß der Fig. 1, zurückgeführt. Dabei wirkt die Federkraft 22 über den Flansch 23 auf die Lagerbuchse 18 und die damit kraftschlüssig verbundene Kolbenstange 8. Durch die axile Begrenzung 21 wird die Dichtscheibe 16 vom Kolbenboden 20 abgehoben. Damit kann das Hydrauliköl aus dem Öl- und Kolbenraum 2.2 und u.U. aus dem Ölreservoir 37 durch die Ölrückflußbohrungen 19 in den Öl- und Kolbenraum 2 vollständig zurückfließen.

Diese vorteilhafte Ausführung des Kolbens 3 mit der, am Kolbenmantel 34 vorgesehenen, Dämpfungsrille 35, die erforderlichenfalls jeden zweckmäßigen, auch einen über die Kolbenlänge veränderten, Steigungsverlauf aufweisen kann, gewährleistet eine sogenannte schwimmende, reibungsarme Kolbenführung in den Öl- und Kolbenräumen 2 und 2.2. Die dabei entstehende Reibungswärme ist vernachlässigbar gering, im Gegensatz zu Stoßdämpferausführungen des Standes der Technik, wo der Kolben durch den dortigen seitlichen Ölablaß durch die einseitig und axial hintereinanderliegenden, die dämpfende Wirkung bewirkenden Ölabflußbohrungen, zur gegenüberliegenden Zylinderwandung hin gepreßt wird, was dort zu einer erheblichen Kolbenreibung und damit verbundenen Erwärmung bei diesen Stoßdämpfern führt.

Es liegt im Rahmen der Erfindung, daß die am Kolbenmantel 34 angeordnete Dämpfungsrille 35 über den gesamten Steigungsverlauf eine unterschiedliche Breite und/oder Tiefe aufweisen kann. Damit kann der Abschwächungsverlauf den jeweiligen Anwendungsfällen äußerst rationell und wirtschaftlich angepaßt werden, d.h. das Abschwächen einer Beschleunigungsenergie kann damit härter oder weicher gemacht werden.

In Abänderung des beschriebenen Stoßdämpfers ist es vorgesehen, daß die axial wendelförmig verlaufende Dämpfungsrille (35), anstelle der zuvor beschriebenen Ausführung, nicht am Kolbenmantel 34, sondern in die Innenmantelfläche 4 des Öl- und Kolbenraums 2.2 eingearbeitet ist. Der zylindrische Kolbenmantel 34 ist in diesem Falle glatt ausgebildet.

Die, mit dieser Abänderung erzielbaren funktions-, als auch herstellungstechnischen Ergebnisse entsprechen im wesentlichen den Erzeugnissen, die mit einem Stoßdämpfer gemäß dem vorliegenden Ausführungsbeispiel erzielbar sind.

## Patentansprüche

1. Hydraulischer Stoßdämpfer, mit einem zylinderförmigen Öl- und Kolbenraum (2), mit einem im Öl- und Kolbenraum (2) unter der Wirkung einer Federkraft (22) in die Ausgangslage beweglichen Kolben (3), der am Kolbenmantel (34) mit einer axial verlaufenden spindelförmigen Dämpfungsrille (35) versehen ist, die in eine an der Innenmantelfläche (4) des Öl- und Kolbenraums (2) vorgesehenen ringförmigen Ölabflußnut (6) mündet, über die das, durch die Dämpfungsrille (34), bei einer Beaufschlagung des Kolbens (3), hindurchgepreßte Öl über einen Ölabflußkanal in ein Ölreservoir abfließt, das beim federkraftbewirkten Zurückbewegen des Kolbens (3) über ein Ölrückflußventil in den Öl- und Kolbenraum (2) zurückgeführt wird, **dadurch gekennzeichnet**, daß axial hinter dem Öl- und Kolbenraum (2) ein zweiter gleich langer Öl- und Kolbenraum (2.2) angeordnet ist, daß an der Innenmantelfläche (4) des zweiten Öl- und Kolbenraums (2.2), dem Kolben (3) unmittelbar benachbart, mindestens eine axial verlaufende Ölabflußrille (5) vorgesehen ist, die auf der einen Kolbenraumseite in die, im Stoßbereich zwischen den beiden Öl- und Kolbenräumen (2 und 2.2) koaxial ringförmig angeordnete, Ölabflußnut (6) mündet, und die auf der gegenüberliegenden Kolbenraumseite in ein koaxial hinter dem zweiten Öl- und Kolbenraum (2.2) vorgesehenes Ölreservoir (37) geführt ist.

2. Stoßdämpfer nach Anspruch 1, dadurch gekennzeichnet, daß auf der Innenmantelfläche (4) des zweiten Öl- und Kolbenraums (2.2) drei, in räumlich gleichen Abständen zueinander, axial verlaufende Ölabflußrillen (5) vorgesehen sind.

3. Stoßdämpfer nach Anspruch 1 und 2, dadurch gekennzeichnet, daß die Ölabflußrillen (5) mit einem radial nur wenig tiefen, rund verlaufenden, Querschnitt versehen sind.

4. Stoßdämpfer nach Anspruch 1 bis 3, dadurch gekennzeichnet, daß der Steigungswinkel der axial spindelförmig am Umfangsmantel (34) des Kolbens (3) verlaufenden Dämpfungsrille (35) gleichförmig und/oder ungleichförmig verlaufend ist.

5. Stoßdämpfer nach Anspruch 1 bis 4, dadurch gekennzeichnet, daß die Dämpfungsrille (35) über den Steigungsverlauf mit einer unterschiedlichen Breite und/oder Tiefe versehen ist.

6. Stoßdämpfer nach Anspruch 1 bis 5, dadurch gekennzeichnet, daß die Dämpfungsrille (35) mit einem rechteckigen Querschnitt versehen ist.

7. Stoßdämpfer nach Anspruch 1 bis 6, dadurch gekennzeichnet, daß das axial hinter dem zweiten Öl- und Kolbenraum (2.2) vorgesehene Ölreservoir (37) aus einer körperelastischen Gummimanschette (7) gebildet ist.

8. Stoßdämpfer nach Anspruch 7, dadurch gekennzeichnet, daß die Gummimanschette (7) ein koaxialer, symmetrischer Formkörper ist, der im Bereich der beiden Stirnflächen (9) jeweils mit koaxialen, kreisrunden Flanschen (10) versehen ist.

9. Stoßdämpfer nach Anspruch 8, dadurch gekennzeichnet, daß die Gummimanschette (7) mit den beiden Flanschen (10) mit Nuten (11) einer Lagerhülse (12) in Eingriff steht.

10. Stoßdämpfer nach Anspruch 7 bis 9, dadurch gekennzeichnet, daß zwischen der Gummimanschette (7) und der Lagerwelle (12) ein koaxialer Gasraum (13) gebildet ist.

11. Stoßdämpfer nach Anspruch 10, dadurch gekennzeichnet, daß zwischen der Innenmantelfläche (4) des Gehäuses (1) und der benachbarten Außenmantelfläche der Gummimanschette (7), gegen die Wirkung des Gasraums (13), ein Ölreservoir (37) ausbildbar ist.

12. Stoßdämpfer nach Anspruch 1 bis 11, dadurch gekennzeichnet, daß das Gehäuse (1) auf der Seite der Kolbenstange (8) mit zwei koaxialen, hintereinanderliegenden Dichtungen (25 und 26) versehen ist.

13. Stoßdämpfer nach Anspruch 12, dadurch gekennzeichnet, daß die Dichtungen (25 und 26) aus einem Dichtungsmittelträger (27 und 27.1), bestehend aus einem zum benachbarten Gehäuseinnenmantel koaxial dichtenden O-Ring (28) und einem zur Kolbenstange (8) hin koaxial dichtenden Dichtring (29), gebildet ist.

14. Stoßdämpfer nach Anspruch 12 und 13, dadurch gekennzeichnet, daß zwischen den beiden Dichtungsmittelträgern (27 und 27.1) eine Entlüftungsrille (39) angeordnet ist, und daß der Lüftungsrille (39) benachbart, in der Wandung des Gehäuses (1) eine Entlüftungsbohrung (40) vorgesehen ist.

15. Stoßdämpfer nach Anspruch 12 bis 14, dadurch gekennzeichnet, daß im Bereich des Dichtungsmittelträgers (27.1) eine Entölungsbohrung (42) und/oder eine Ölabführnut (43) zwischen dem, der Kolbenstange (8) benachbarten Dichtring (29) und dem Ölreservoir (37) im Bereich der Gummimanschette (7), vorgesehen ist.

16. Stoßdämpfer nach Anspruch 12 bis 15, dadurch gekennzeichnet, daß der der Lagerhülse (12) benachbarte Dichtungsmittelträger (27.1) einstückig mit der Lagerhülse (12) verbunden ist.

17. Stoßdämpfer nach Anspruch 1 bis 16, dadurch gekennzeichnet, daß der Kolbenboden (20) des Kolbens (3) mit mehreren axial verlaufenden Ölrückflußbohrungen (19) versehen ist.

18. Stoßdämpfer nach Anspruch 1 bis 17, dadurch gekennzeichnet, daß der Kolben (3) zur Bildung eines Ölspaltes (14) axial begrenzt verschiebbar auf der Kolbenstange (8), insbesondere auf einem mit der Kolbenstange (8) einstückig verbundenen Zapfen (15), gelagert ist.

19. Stoßdämpfer nach Anspruch 1 bis 18, dadurch gekennzeichnet, daß zwischen dem Kolbenboden (20) des Kolbens (3) und der einen Stirnfläche der Lagerhülse (12) eine Dichtscheibe (16) auf der Kolbenstange (8) koaxial angeordnet und gelagert ist.

20. Stoßdämpfer nach Anspruch 19, dadurch gekennzeichnet, daß die äußere Mantelfläche (17) der Dichtscheibe (16) um einen Ölspalt kleiner ist, als der Durchmesser der benachbarten Innenmantelfläche (4) des zweiten Öl- und Kolbenraums (2.2).

21. Stoßdämpfer nach Anspruch 1 bis 20, dadurch gekennzeichnet, daß das Gehäuse (1) mit einem, insbesondere über die gesamte äußere zylindrische Länge verlaufenden, Schraubengewinde (30) versehen ist.

22. Stoßdämpfer nach Anspruch 1 bis 21, dadurch gekennzeichnet, daß am äußeren Umfang des Gehäuses (1), im Bereich des Austritts der Kolbenstange (8), ein einseitiger, koaxial verlaufender, zylindrischer Bolzen (41), für die Anordnung eines Dichtungsrings, angeordnet ist.

23. Stoßdämpfer nach Anspruch 1 bis 22, dadurch gekennzeichnet, daß am äußeren Umfang des Gehäuses (1), insbesondere im Bereich des, dem Austritt der Kolbenstange (8) gegenüberliegenden, Gehäuseendes, zwei einander gegenüberliegende Flächen (38), zum Ansetzen eines Werkzeuges, angeordnet sind.

24. Stoßdämpfer nach Anspruch 1 bis 23, dadurch gekennzeichnet, daß der Kolben (3) und/oder die Dichtscheibe (16) aus einem oberflächengehärteten Stahl hergestellt sind.

## Claims

1. Hydraulic dashpot with a cylindrical oil and piston chamber (2), with a piston (3), which is movable into the initial position in the oil and piston chamber (2) under the effect of a spring force (22) and which is provided at the piston casing (34) with an axially extending spindle-shaped damping groove (35), which opens into an annular oil outflow groove (6), which is provided at the inward casing surface (4) of the oil and piston chamber (2) and by way of which the oil, which on a loading of the piston (3) is pressed through the damping groove (35), flows away by way of an oil outflow channel into an oil reservoir and which, on a return movement of the piston (3) caused by spring force, is conducted back by way of an oil return flow valve into the oil and piston chamber (2), characterised thereby, that a second equally long oil and piston chamber (2.2) is arranged axially behind the oil and piston chamber (2), that at least one axially extending oil outflow groove (5) is provided at the inward casing surface (4) of the second oil and piston chamber (2.2) and immediately adjacent the piston (3) and opens on the one piston chamber side into the oil outflow groove (6), which is annularly arranged co-axially in the butting region between both the oil and piston chambers (2 and 2.2), and is led on the oppositely disposed piston chamber side into an oil reservoir (37) provided co-axially behind the second oil and piston chamber (2.2).

2. Dashpot according to claim 1, characterised thereby, that three oil outflow grooves (5), which extend axially at spatially equal spacings one from the other, are Drovided on the inward casing surface (4) of the second oil and position chamber (2).

3. Dashpot according to claim 1 and 2, characterised thereby, that the oil outflow grooves (5) are provided with a round cross-section of only little radial depth.

4. Dashpot according to claim 1 to 3, characterised thereby, that the pitch angle of the damping groove (35), which extends axially in spindle shape at the circumferential casing (34) of the piston (3), extends uniformly and/or non-uniformly.

5. Dashpot according to claim 1 to 4, characterised thereby, that the damping groove (35) is provided with a width and/or depth varying over the helical course.

6. Dashpot according to claim 1 to 5, characterised thereby, that the damping groove (35) is provided with a rectangular cross-section.

7. Dashpot according to claim 1 to 6, characterised thereby, that the oil reservoir (37), which is provided axially behind the second oil and piston chamber (2.2), is formed of a body-elastic rubber sleeve (7).

8. Dashpot according to claim 7, characterised thereby, that the rubber sleeve (7) is a co-axial symmetrical moulded body which is provided with respective co-axial circularly round flanges (10) in the region of each of both the end faces (9).

9. Dashpot according to claim 8, characterised thereby, that the rubber sleeve (7) stands in engagement by both the flanges (10) with grooves (11) of a bearing sleeve (12).

10. Dashpot according to claim 7 to 9, characterised thereby, that a co-axial gas chamber (13) is formed between the rubber sleeve (7) and the bearing sleeve (12).

11. Dashpot according to claim 10, characterised thereby, that an oil reservoir (37) is formable between the inward casing surface (4) of the housing (1) and the neighbouring outward casing surface of the rubber sleeve (7) against the effect of the gas chamber (13).

12. Dashpot according to claim 1 to 11, characterised thereby, that the housing (1) is provided on the side of the piston rod (8) with two co-axial seals (25 and 26) lying one behind the other.

13. Dashpot according to claim 12, characterised thereby, that the seals (25 and 26) are formed of a sealing medium carrier (27 and 27.1) consisting of an 0-ring (28) sealing co-axially towards the neighbouring inward housing casing and of a sealing ring (29) sealing co-axially towards the piston rod (8).

14. Dashpot according to claim 12 and 13, characterised thereby, that a venting groove (39) is arranged between both the sealing medium carriers (27 and 27.1) and that a vent bore (40) is provided in the wall of the housing (1) in the neighbourhood of the venting groove (39).

15. Dashpot according to claim 12 to 14, characterised thereby, that an oil removal bore (42) and/or an oil discharge groove (43) is provided in the region of the sealing medium carrier (27.1) between the sealing ring (29) adjacent the piston rod (8) and the oil reservoir (37) in the region of the rubber sleeve (7).

16. Dashpot according to claim 12 to 15, characterised thereby, that the sealing medium carrier (27.1) adjacent the bearing sleeve (12) is integrally connected with the bearing sleeve (12).

17. Dashpot according to claim 1 to 16, characterised thereby, that the piston head (20) of the piston (3) is provided with several axially extending oil return flow bores (19).

18. Dashpot according to claim 1 to 17, characterised thereby, that the piston (3) is borne to be axially limitedly displaceable on the piston rod (8), in particular on a spigot (15) integrally connected with the piston rod (8), for the formation of an oil gap (14).

19. Dashpot according to claim 1 to 18, characterised thereby, that a sealing washer (16) is co-axially arranged on the piston rod (8) between the piston head (20) of the piston (3) and the one end face of the bearing sleeve (12).

20. Dashpot according to claim 19, characterised thereby, that the outward casing surface (17) of the sealing washer (16) is smaller by an oil gap than the diameter of the neighbouring inward casing surface (4) of the second oil and piston chamber (2.2).

21. Dashpot according to claim 1 to 20, characterised thereby, that the housing (1) is provided with a screw thread (30), in particular one extending over the entire outer cylindrical length.

22. Dashpot according to claim 1 to 21, characterised thereby, that a single-ended, co-axially extending cylindrical pin (41) for the arrangement of a sealing ring is arranged at the outer circumference of the housing (1) in the region of the exit of the piston rod (8).

23. Dashpot according to claim 1 to 22, characterised thereby, that two mutually opposite surfaces (38) for the application of a tool are arranged at the outer circumference of the housing (1), in particular in the region of the housing end lying opposite the exit of the piston rod (8).

24. Dashpot according to claim 1 to 23, characterised thereby, that the piston (3) and/or the sealing washer (16) are/is made of a surface-hardened steel.

## Revendications

1. Amortisseur hydraulique, comportant une chambre de forme cylindrique (2) pour l'huile et le piston, un piston (3) placé à l'intérieur de ladite chambre (2) et sous l'effet d'une force de ressort (22) mobile vers sa position initiale, ledit piston (3) étant muni sur sa chemise (34) d'une cannelure d'amortissement (35) fusiforme, s'étendant axialement, laquelle débouche dans une gorge (6) d'évacuation d'huile annulaire, prévue sur la face intérieure (4) de la chemise de la chambre (2), gorge (6) à travers laquelle l'huile comprimée à travers la cannelure d'amortissement (35) lors d'un actionnement du piston (3) s'écoule à travers un canal d'évacuation pour parvenir dans le réservoir d'huile et qui, lors du retour provoqué sous la force d'un ressort du piston (3) retourne, à travers une vanne de retour, dans ladite chambre (2), caractérisé en ce que, axialement derrière la chambre (2) pour l'huile et le piston est disposée une deuxième chambre (2.2) de même longueur, en ce que sur la face intérieure (4) de la chemise de la deuxième chambre (2.2), au voisinage immédiat du piston (3), est prévue au moins une cannelure d'écoulement d'huile (5) laquelle débouche, sur un côté de la chambre à piston, dans la gorge (6) d'écoulement d'huile disposée de manière coaxiale et annulaire dans la zone de butée entre les deux chambres (2 et 2.2), ladite cannelure (5) conduisant, sur le côté opposé de la chambre à piston, dans un réservoir d'huile (37) prévu coaxialement derrière la deuxième chambre à huile et à piston (2.2).

2. Amortisseur selon la revendication 1, caractérisé en ce que sur la face intérieure (4) de la chemise de la deuxième chambre (2.2) sont prévues, à des distances mutuelles égales, des cannelures (5) d'écoulement d'huile qui s'étendent axialement.

3. Amortisseur selon les revendications 1 et 2, caractérisé en ce que les cannelures d'écoulement d'huile (5) présentent une section transversale ronde, radialement peu profonde.

4. Amortisseur selon les revendications 1 à 3, caractérisé en ce que le pas de la cannelure d'amortissement (35) qui s'étend de manière axialement fusiforme sur la chemise (34) du piston (3), reste identique sur tout le trajet et/ou se modifie.

5. Amortisseur selon les revendications 1 à 4, caractérisé en ce que la cannelure d'amortissement (35) présente sur tout son trajet des largeurs et/ou des profondeurs différentes.

6. Amortisseur selon les revendications 1 à 5, caractérisé en ce que la cannelure d'amortissement (35) présente une section transversale rectangulaire.

7. Amortisseur selon les revendications 1 à 6, caractérisé en ce que le réservoir d'huile (37) prévu axialement derrière la deuxième chambre à huile et à piston (2.2) est constitué d'un manchon en caoutchouc (7) dont tout le corps est élastique.

8. Amortisseur selon la revendication 7, caractérisé en ce que le manchon en caoutchouc (7) est un corps moulé coaxial, symétrique, qui présente au niveau des deux faces frontales (9) respectivement des brides (10) coaxiales, circulaires.

9. Amortisseur selon la revendication 8, caractérisé en ce que le manchon en caoutchouc (7) avec ses deux brides (10), est en prise avec des rainures (11) d'un palier (12).

10. Amortisseur selon les revendications 7 à 9, caractérisé en ce qu'entre le manchon en caoutchouc (7) et le palier (12) se forme une chambre à gaz (13) coaxiale.

11. Amortisseur selon la revendication 10, caractérisé en ce qu'entre la face (4) du chemisage intérieur du carter (1) et la face voisine du chemisage extérieur du manchon en caoutchouc (7), peut se former un réservoir d'huile (37) qui s'oppose à l'effet de la chambre à gaz (13).

12. Amortisseur selon les revendications 1 à 11, caractérisé en ce que le carter (1) est muni sur le côté de la tige de piston (8) de deux garnitures d'étanchéité (25 et 26) coaxiales, placées l'une derrière l'autre.

13. Amortisseur selon la revendication 12, caractérisé en ce les garnitures d'étanchéité (25 et 26) sont constituées d'un support à fluide d'étanchéité (27 et 27.1), formé d'un joint torique (28) étanche coaxialement en direction de la chemise intérieure voisine du carter et d'un joint torique (29) étanche coaxialement en direction de la tige de piston (8).

14. Amortisseur selon les revendications 12 et 13, caractérisé en ce qu'entre les deux supports de fluide (27 et 27.1) est disposé une gorge de ventilation (39) et qu'au voisinage de cette gorge de ventilation (39) dans la paroi du carter (1) est prévu un perçage de ventilation (40).

15. Amortisseur selon les revendications 12 à 14, caractérisé en ce que dans la région du support de fluide (27.1) est prévu un perçage de drainage d'huile (42) et/ou une gorge d'évacuation d'huile (43), entre le joint torique (29) proche de la tige de piston (8) et le réservoir d'huile (37) au voisinage du manchon en caoutchouc (7).

16. Amortisseur selon les revendications 12 à 15, caractérisé en ce que le support à fluide d'étanchéité (27.1) proche du palier (12) est assemblé de manière monobloc audit palier (12).

17. Amortisseur selon les revendications 1 à 16, caractérisé en ce que le fond (20) du piston (3) est muni de plusieurs perçages (19) de retour d'huile qui s'étendent axialement.

18. Amortisseur selon les revendications 1 à 17, caractérisé en ce que le piston (3), en vue de former un interstice (14) pour l'huile, est monté, de manière à pouvoir coulisser axialement entre certaines limites, sur la tige de piston (8) en particulier sur un tourillon (15) assemblé de manière monobloc à ladite tige du piston (8).

19. Amortisseur selon les revendications 1 à 18, caractérisé en ce qu'entre le fond (20) du piston (3) et de l'une des faces frontales du palier (12) est montée et disposée coaxialement sur la tige de piston (8) une rondelle d'étanchéité (16).

20. Amortisseur selon la revendication 19, caractérisé en ce que la face enveloppante extérieure (17) de la rondelle d'étanchéité (16) est inférieure d'un interstice d'huile au diamètre de la face enveloppante intérieure voisine (4) de la chambre à piston (2.2).

21. Amortisseur selon les revendications 1 à 20, caractérisé en ce que le carter est muni d'un filetage hélicoïdal (30) qui s'étend plus particulièrement sur la totalité de la longueur extérieure du cylindre.

22. Amortisseur selon les revendications 1 à 21, caractérisé en ce que sur le pourtour extérieur du carter 1, dans la région de la sortie de la tige de piston (8), est disposée une tige (41) cylindrique, s'étendant coaxialement, destinée pour y disposer un joint d'étanchéité.

23. Amortisseur selon les revendications 1 à 22, caractérisé en ce que sur le pourtour extérieur du carter 1, en particulier dans la région de l'extrémité de ce carter opposée à la sortie de la tige de piston (8), sont disposées deux surfaces (38) mutuellement opposées destinées à l'application d'un outil.

24. Amortisseur selon les revendications 1 à 23, caractérisé en ce que le piston 3 et/ou la rondelle d'étanchéité 16 sont réalisés en un acier ayant subi une trempe superficielle.
